# EUROPÄISCHE PATENTANMELDUNG

(11) **EP 0 610 747 A1**
(43) Veröffentlichungstag der Anmeldung: **17.08.1994**
(21) Anmeldenummer: 94101268.4
(22) Anmeldetag: 28.01.1994
(51) Int. Cl.: C07F 9/6574, C07F 9/6521

(54) **Phosphorsäurepolyester und ein Verfahren zu ihrer Herstellung**

(30) Priorität: 09.02.1993 DE 4303654
(71) Anmelder: HOECHST AKTIENGESELLSCHAFT, D-65926 Frankfurt am Main (DE)
(72) Erfinder: Staendeke, Horst, Dr., D-53797 Lohmar (DE)

(57) **Zusammenfassung**

Die Erfindung betrifft Phosphorsäurepolyester gemäß den allgemeinen Formeln 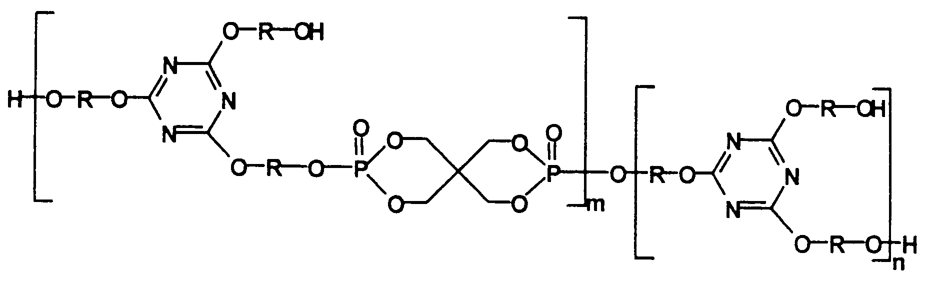
oder 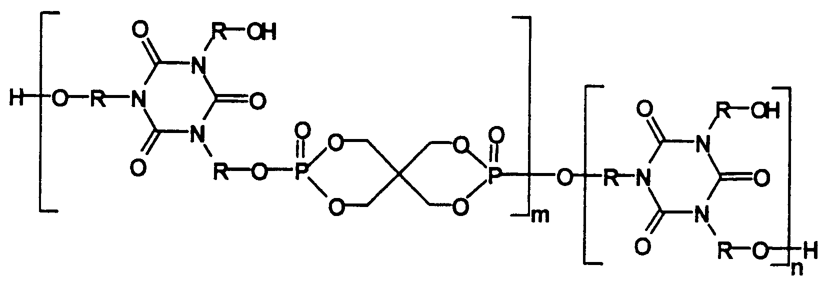
in welchen R für =CH₂, =C₂H₄ oder =C₃H₆ steht sowie m 1 bis 10 und n 1 bis 6 sind.

Zur Herstellung dieser Phosphorsäurepolyester setzt man den cyclischen Phosphorsäureester 2,4,8,10-Tetraoxa-3,9-dioxo-3,9-dihydroxy-phosphaspiro[5.5]-undecan mit Trishydroxyalkylcyanurat oder Tris-hydroxyalkylisocyanurat bei Temperaturen von 120 bis 250°C in Gegenwart eines Katalysators 2 bis 12 Stunden unter intensiver Vermischung um.

## Beschreibung

Die vorliegende Erfindung betrifft Phosphorsäurepolyester sowie ein Verfahren zu ihrer Herstellung.

Durch Reaktion von Pentaerythrit mit überschüssigem Phosphoroxichlorid ist das Dichlorid eines cyclischen Phosphorsäureesters (2,4,8,10-Tetraoxa-3,9-dioxo-3,9-dichloro-phosphaspiro[5.5]-undecan) in guten Ausbeuten zugänglich, das durch anschließende Hydrolyse in den cyclischen Phosphorsäureester (2,4,8,10-Tetraoxa-3,9-dioxo-3,9-dihydroxy-phosphaspiro[5.5]-undecan umgewandelt werden kann (vergl. J. Org. Chem. 28, 1963, Seiten 1608 bis 1612).

Diesen Umsetzungen liegen folgende Reaktionen zugrunde: 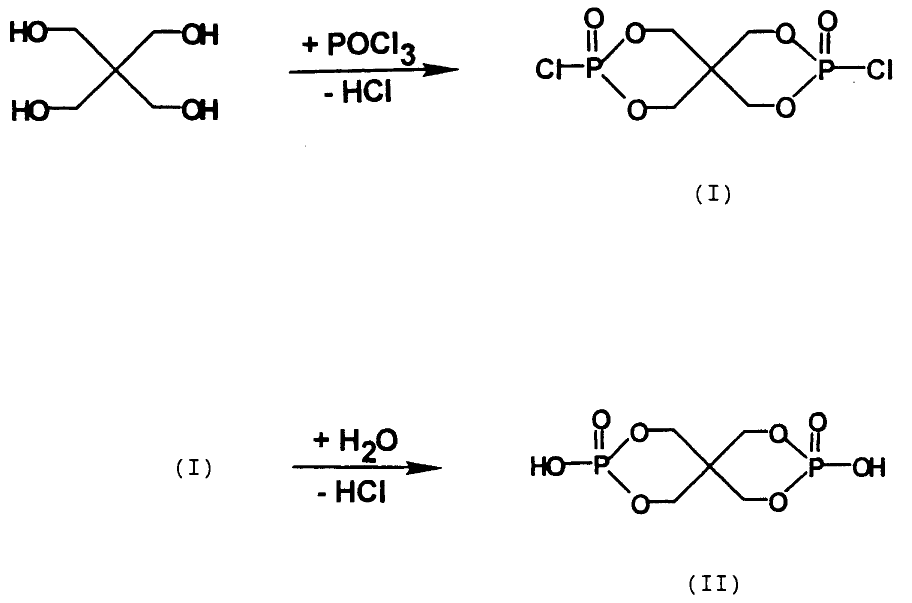
Der so erhaltene cyclische Phosphorsäureester (II) wird dann erfindungsgemäß bei erhöhter Temperatur mit einem Tris-hydroxyalkylcyanurat der allgemeinen Formel (III) 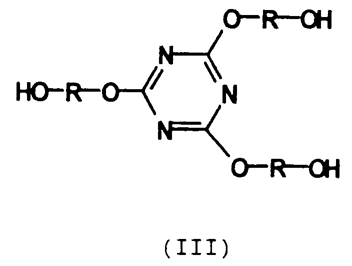
oder einem Tris-hydroxyalkylisocyanurat der allgemeinen Formel (IV) 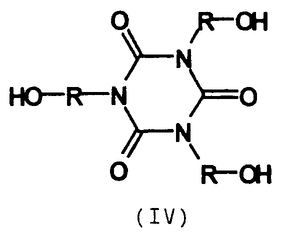
umgesetzt, wobei unter Wasserabspaltung Reaktionsprodukte der allgemeinen Formel (V) 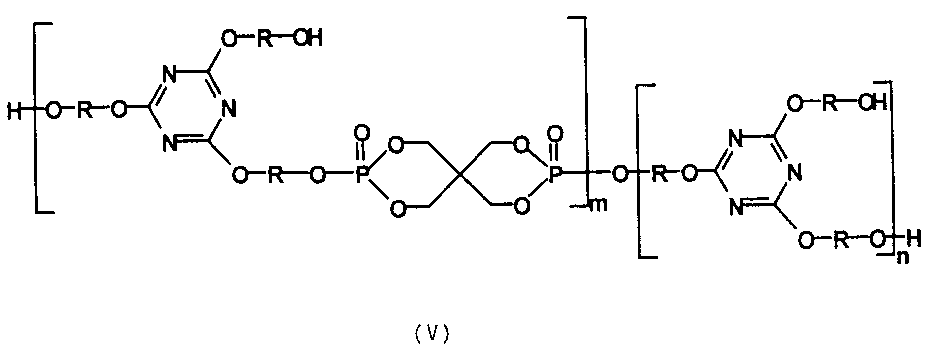
oder der allgemeinen Formel (VI) 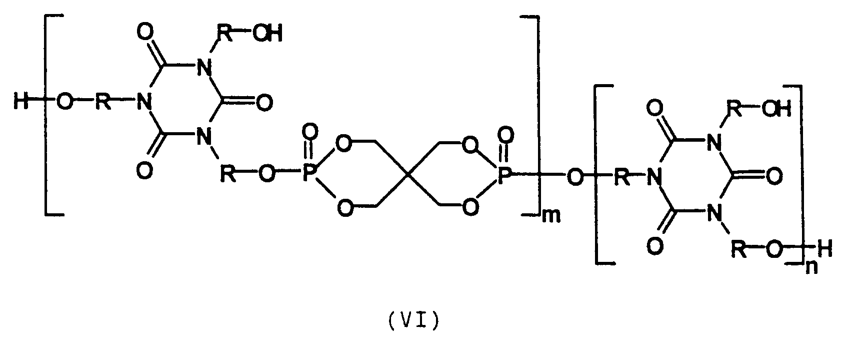
gebildet werden, in welchen R für =CH₂, =C₂H₄ oder =C₃H₆ steht sowie m 1 bis 10, vorzugsweise 1 bis 6 und n 1 bis 6, vorzugsweise 1 bis 3 sind.

Zur Herstellung dieser Phosphorsäurepolyester setzt man den cyclischen Phosphorsäureester 2,4,8,10-Tetraoxa-3,9-dioxo-3,9-dihydroxy-phosphaspiro[5.5]-undecan mit Tris-hydroxyalkylcyanurat oder Tris-hydroxyalkylisocyanurat bei Temperaturen von 120 bis 250°C in Gegenwart eines Katalysators 2 bis 12 Stunden unter intensiver Vermischung um.

Das genannte Verfahren zur Herstellung der Phosphorsäurepolyester kann weiterhin wahlweise auch noch dadurch ausgestaltet sein, daß
a) man die Umsetzung bei Temperaturen von 150 bis 200°C durchführt;
b) man die Umsetzung während 5 bis 10 Stunden durchführt;
c) der Katalysator mindestens eine metallorganische Verbindung ist;
d) der Katalysator Titan enthält;
e) Tetra-n-butyltitanat verwendet ist.

Das Verfahren zur Herstellung der Phosphorsäurepolyester gemäß der Erfindung kann unter Normaldruck oder unter vermindertem Druck durchgeführt werden.

Die erfindungsgemäßen Phosphorsäurepolyester können als Flammschutzmittel, insbesondere in Kombination mit Ammoniumpolyphosphat, verwendet werden.

Die Prozentangaben in den folgenden Beispielen sind Gewichtsprozente.

### Beispiel 1

In einem beheizbaren Laborkneter (Arbeitsvolumen: 5 1) wurden
1096 g (4,2 Mol) Tris-(2-hydroxyethyl)-isocyanurat (THEIC)
1092 g (4,2 Mol) cyclischer Phosphorsäureester (2,4,8,10-Tetraoxa-3,9-dioxo-3,9-dihydroxy-phospha-spiro[5.5]-undecan)
21 g Tetra-n-butyltitanat
eingefüllt und unter einem schwachen Stickstoffstrom nach folgendem Zeit/Temperaturprogramm zur Reaktion gebracht:

| Zeit (Std.) | Temperatur (°C) |
|---|---|
| 2 | 20 - 150 |
| 1 | 150 - 170 |
| 4 | 170 - 185 |

Das Reaktionsprodukt wurde nach dem Erkalten in einer Porzellankugelmühle gemahlen und anschließend analysiert:

| | | |
|---|---|---|
| Gehalt an | Phosphor | 10,0 % |
| | Kohlenstoff | 33,5 % |
| | Stickstoff | 9,0 % |
| | Wasserlöslichkeit bei 25°C: | 3,0 % |
| | Wasserlöslichkeit bei 60°C: | 3,4 % |

Setzt man in die allgemeine Formel (VI) (vergl. Seite 3) für R =C₂H₄, für m 2 und für n 1 ein, so lassen sich die folgenden Werte errechnen:

| | | |
|---|---|---|
| Gehalt an | Phosphor | 10,1 % |
| | Kohlenstoff | 36,1 % |
| | Stickstoff | 10,2 % |

Diese Werte stimmen relativ gut mit den analytisch ermittelten Werten überein.

### Beispiel 2

Es wurde analog Beispiel 1 gearbeitet, wobei jedoch
1044 g (4 Mol) THEIC
780 g (3 Mol) cyclischer Phosphorsäureester
18 g Tetra-n-butyltitanat
eingesetzt wurden.

Die Einsatzstoffe wurden nach folgendem Zeit/Temperaturprogramm zur Reaktion gebracht:

| Zeit (Std.) | Temperatur (°C) |
|---|---|
| 2 | 20 - 150 |
| 1 | 150 - 170 |
| 2 | 170 - 190 |

Das Reaktionsprodukt wurde analog Beispiel 1 aufbereitet und analysiert:

| | | |
|---|---|---|
| Gehalt an | Phosphor | 11,9 % |
| | Kohlenstoff | 32,9 % |
| | Stickstoff | 8,2 % |
| | Wasserlöslichkeit bei 25°C: | 1,7 % |
| | Wasserlöslichkeit bei 60°C: | 1,9 % |

Setzt man in die allgemeine Formel (VI) (vergl. Seite 3) für R =C₂H₄, für m 8 und für n 1 ein, so lassen sich die folgenden Werte errechnen:

| | | |
|---|---|---|
| Gehalt an | Phosphor | 12,0 % |
| | Kohlenstoff | 35,1 % |
| | Stickstoff | 9,1 % |

Diese Werte stimmen relativ gut mit den analytisch ermittelten Werten überein.

### Beispiel 3

Es wurde analog Beispiel 1 gearbeitet, wobei jedoch
1305 g (5 Mol) THEIC
650 g (2,5 Mol) cyclischer Phosphorsäureester
20 g Tetra-n-butyltitanat
eingesetzt wurden.
Die Einsatzstoffe wurden nach folgendem Zeit/Temperaturprogramm zur Reaktion gebracht:

| Zeit (Std.) | Temperatur (°C) |
|---|---|
| 2 | 20 - 150 |
| 2 | 150 - 170 |
| 2 | 170 - 200 |

Das Reaktionsprodukt wurde analog Beispiel 1 aufbereitet und analysiert:

| | | |
|---|---|---|
| Gehalt an | Phosphor | 8,3 % |
| | Kohlenstoff | 36,9 % |
| | Stickstoff | 11,2 % |
| | Wasserlöslichkeit bei 25°C: | 0,4 % |
| | Wasserlöslichkeit bei 60°C: | 0,5 % |

Setzt man in die allgemeine Formel (VI) (vergl. Seite 3) für R =C₂H₄, für m 1 und für n 1 ein, so lassen sich die folgenden Werte errechnen:

| | | |
|---|---|---|
| Gehalt an | Phosphor | 8,3 % |
| | Kohlenstoff | 37,0 % |
| | Stickstoff | 11,3 % |

Diese Werte stimmen nahezu vollständig mit den analytisch ermittelten Werten überein.

### Beispiel 4

Es wurde analog Beispiel 1 gearbeitet, wobei jedoch
1305 g (5 Mol) THEIC
520 g (2 Mol) cyclischer Phosphorsäureester
18 g Tetra-n-butyltitanat
eingesetzt wurden.
Die Einsatzstoffe wurden nach folgendem Zeit/Temperaturprogramm zur Reaktion gebracht:

| Zeit (Std.) | Temperatur (°C) |
|---|---|
| 2 | 20 - 150 |
| 2 | 150 - 170 |
| 6 | 170 bis 200 |

Das Reaktionsprodukt wurde analog Beispiel 1 aufbereitet und analysiert:

| | | |
|---|---|---|
| Gehalt an | Phosphor | 7,1 % |
| | Kohlenstoff | 37,8 % |
| | Stickstoff | 12,0 % |
| | Wasserlöslichkeit bei 25°C: | 0,2 % |
| | Wasserlöslichkeit bei 60°C: | 0,4 % |

Setzt man in die allgemeine Formel (VI) (vergl. Seite 3) für R =C₂H₄, für m 1 und für n 1,5, so lassen sich die folgenden Werte errechnen:

| | | |
|---|---|---|
| Gehalt an | Phosphor | 7,1 % |
| | Kohlenstoff | 38,0 % |
| | Stickstoff | 12,1 % |

Diese Werte stimmen sehr gut mit den analytisch ermittelten Werten überein.

## Patentansprüche

1. Phosphorsäurepolyester gemäß den allgemeinen Formeln 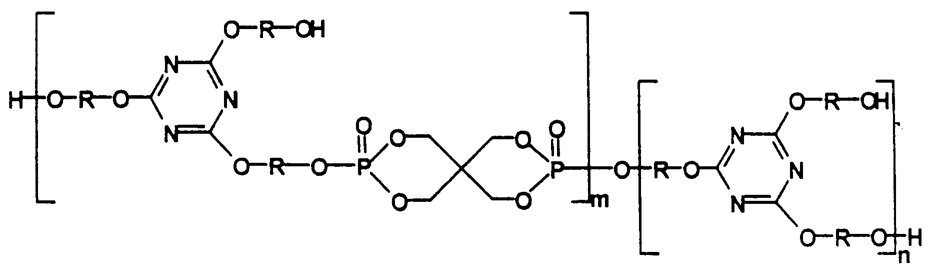 oder 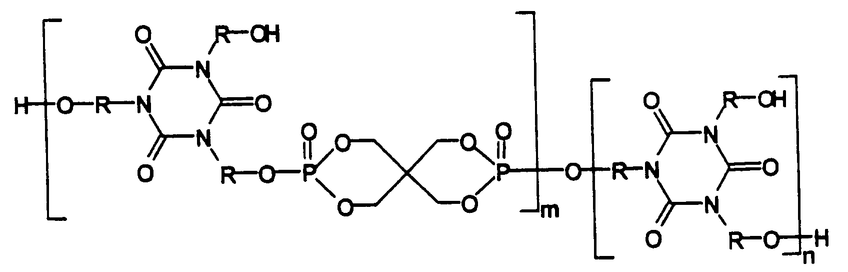 in welchen R für =CH₂, =C₂H₄ oder =C₃H₆ steht sowie m 1 bis 10, vorzugsweise 1 bis 6 und n 1 bis 6, vorzugsweise 1 bis 3 sind.

2. Verfahren zur Herstellung der Phosphorsäurepolyester nach Anspruch 1, dadurch gekennzeichnet, daß man den cyclischen Phosphorsäureester 2,4,8,10-Tetraoxa-3,9-dioxo-3,9-dihydroxy-phosphaspiro[5.5]-undecan mit Trishydroxyalkylcyanurat oder Tris-hydroxyalkylisocyanurat bei Temperaturen von 120 bis 250°C in Gegenwart eines Katalysators 2 bis 12 Stunden unter intensiver Vermischung umsetzt.

3. Verfahren nach Anspruch 2, dadurch gekennzeichnet, daß man die Umsetzung bei Temperaturen von 150 bis 200°C durchführt.

4. Verfahren nach Anspruch 2 oder 3, dadurch gekennzeichnet, daß man die Umsetzung während 5 bis 10 Stunden durchführt.

5. Verfahren nach mindestens einem der Ansprüche 2 bis 4, dadurch gekennzeichnet, daß der Katalysator mindestens eine metallorganische Verbindung ist.

6. Verfahren nach Anspruch 5, dadurch gekennzeichnet, daß der Katalysator Titan enthält.

7. Verfahren nach Anspruch 5 oder 6, dadurch gekennzeichnet, daß Tetra-n-butyltitanat verwendet ist.
